# EUROPÄISCHE PATENTSCHRIFT

(11) **EP 2 845 679 B1**
(45) Veröffentlichungstag und Bekanntmachung des Hinweises auf die Patenterteilung: **01.04.2020**
(21) Anmeldenummer: 14181727.0
(22) Anmeldetag: 21.08.2014
(51) Int. Cl.: B23P 19/06, F16B 37/06

(54) **Verfahren zum einstanzen und befestigen eines befestigungselements**
Method for stamping and fixing a fastening element
Procédé d'estampage et de fixation d'un élément de fixation

(30) Priorität: 28.08.2013 DE 102013217213
(43) Veröffentlichungstag der Anmeldung: 11.03.2015
(73) Patentinhaber: Profil Verbindungstechnik GmbH & Co. KG, 61381 Friedrichsdorf (DE)
(72) Erfinder: Babej, Jiri, 35423 Lich (DE); Humpert, Richard, 61231 Bad Nauheim (DE)
(74) Vertreter: Manitz Finsterwald Patent- und Rechtsanwaltspartnerschaft mbB

(56) Entgegenhaltungen:
- CA-A- 902 350
- DE-A1- 19 847 980
- DE-A1-102008 005 288
- JP-U- S6 296 946
- US-A- 3 022 687
- US-A- 4 765 057

## Beschreibung

Die vorliegende Erfindung betrifft ein Verfahren zum Einstanzen und Befestigen eines Befestigungselements an einem ebenen Werkstück, insbesondere an einem Blechteil.

Bei dem Einstanzen eines Befestigungselements in ein Werkstück tritt oftmals das Problem auf, dass durch den Stanzprozess Späne erzeugt werden, die sich nachteilig auf die Zuverlässigkeit der Befestigung des Elements auswirken können. Oftmals werden die Späne zwischen einem Nietabschnitt, der während oder nach dem eigentlichen Einstanzen des Befestigungselements zu dessen Fixierung an dem Werkstück umgebördelt wird, und dem Werkstück eingeklemmt. In manchen Fällen bleiben die Späne auch in einer Matrize liegen, die beim Einstanzen und Umbördeln des Nietabschnitts zum Einsatz gelangt. Die Späne werden dann mit dem eingestanzten und an dem Werkstück fixierten Befestigungselement aus der Matrize ausgehoben und wandern anschließend als Fremdkörper durch das Werkzeug und können im weiteren Verlauf einer Bauteileherstellung z.B. zu unschönen Abdrücken in den gefertigten Zusammenbauteilen führen.

Die US 4,765,057 offenbart ein Verfahren gemäß dem Oberbegriff des Anspruchs 1. Die DE 198 47 980 A1 widmet sich einem Verfahren, bei dem der Matrizenstempel vor dem Heraustrennen des Butzens bewegt wird, bzw. einem Verfahren ohne ein Heraustrennen eines Butzens.

Es ist eine Aufgabe der vorliegenden Erfindung, ein Verfahren der eingangs genannten Art zu schaffen, bei dem die Entstehung von Spänen vermieden wird.

Die Lösung dieser Aufgabe erfolgt durch ein Verfahren mit den Merkmalen des Anspruchs 1.

Erfindungsgemäß wird während dem Einstanzen des Befestigungselements in das Werkstück ein beweglich angeordneter Matrizenstempel der Matrize mit einer vorbestimmten Anpresskraft gegen das Werkstück gepresst. Die Anpresskraft ist dabei derart angepasst, dass sich der Matrizenstempel erst bewegt, wenn durch einen Stanzabschnitt des Befestigungselements ein Butzen aus dem Werkstück herausgetrennt wurde.

Es wurde nämlich von den Erfindern erkannt, dass bei herkömmlichen Einstanzverfahren durch den Stanz- und Nietabschnitt des Befestigungselements zunächst eine Sicke gezogen wird, die in die Matrize hineinragt. Dabei wird das Werkstück an der dem Stanz- und Nietabschnitt gegenüber liegenden Seite stark gedehnt. An der Stelle des kleinsten Biegeradius des gedehnten Bereichs entsteht ein Riss, der nicht zwingend mit einer durch die Matrize und den Stanz- und Nietabschnitt definierten Schnittkante des auszustanzenden Butzens zusammenfällt. Dies bedeutet, dass bei dem Einstanzen ein insbesondere ringförmiger Span entsteht, der die eingangs genannten Probleme verursacht.

Erfindungsgemäß wird diese Problematik dadurch verhindert, dass während des Einstanzvorgangs, bei dem der Butzen aus dem Werkstück herausgetrennt wird, eine Abstützung des Werkstücks erfolgt. Dies geschieht durch den Matrizenstempel, der von einer dem einzustanzenden Befestigungselement gegenüber liegenden Seite des Werkstücks gegen selbiges gepresst wird. Dadurch wird das Entstehen der bei herkömmlichen Verfahren anfänglich auftretenden Sicke vermieden. Erst wenn der mit dem Einstanzen einhergehende Schneidprozess beendet ist - d.h. sobald der Butzen im Wesentlichen vollständig von dem Werkstück getrennt ist -, wird eine Bewegung des Matrizenstempels zugelassen. Grundsätzlich kann es vorgesehen sein, dass gleich nach dem Abschluss des Schneidprozesses eine Bewegung des Matrizenstempels zugelassen wird. Es ist jedoch auch möglich, eine Bewegung des Matrizenstempels mit zeitlicher Verzögerung vorzusehen, d.h. wenn bereits ein gewisser Teil des Stanzabschnitts des Befestigungselements durch das Werkstück getreten ist. Die Bewegung des Matrizenstempels erfolgt dabei in Bewegungsrichtung des Befestigungselements.

Grundsätzlich ist es möglich, dass der Matrizenstempel aktiv bewegt wird. Bevorzugt ist jedoch eine passive Bewegung des Matrizenstempels. Dabei macht man sich zunutze, dass die bei dem Einstanzprozess auftretenden Kräfte variieren. Die vorbestimmte Anpresskraft kann daher derart gewählt werden, dass eine Bewegung des Matrizenstempels erst in bestimmten Zuständen automatisch einsetzt, d.h. konkret erst nachdem der Butzen durch das Befestigungselement aus dem Werkstück gestanzt wurde und die zwischen dem Matrizenstempel und dem Befestigungselement wirkenden Kräfte die Anpresskraft übersteigen.

Weitere Ausführungsformen des erfindungsgemäßen Verfahrens sind in der Beschreibung, den Ansprüchen und den beigefügten Zeichnungen angegeben.

Gemäß einer Ausführungsform des Verfahrens ist der Matrizenstempel in einer Richtung parallel zu einer Einstanzbewegung des Befestigungselements beweglich. Die Anpresskraft, d.h. die Kraft, die den Matrizenstempel in Richtung auf das Werkstuck zu vorspannt, ist insbesondere antiparallel zu einer Einstanzbewegung des Befestigungselements gerichtet. Die Anpresskraft ist erfindungsgemäß derart gewählt, dass sich der Matrizenstempel erst bewegt, wenn ein Befestigungsabschnitt des Befestigungselements durch eine Umformfläche des Matrizenstempels verformt wird. D.h. die Anpresskraft ist so groß, dass der Matrizenstempel erst in Bewegung versetzt wird, wenn aufgrund der Umformung eines Abschnitts des Befestigungsabschnitts, beispielsweise eines als Nietabschnitt fungierenden Teils des Stanzabschnitts, die dabei auftretenden Kräfte die Anpresskraft übersteigen.

Gemäß einer Ausführungsform des Verfahrens umfasst der Matrizenstempel eine Erhebung, die zu Beginn des Einstanzprozesses aus einer Ebene herausragt, die durch einen Rand einer Ausnehmung der Matrize definiert ist. Mit anderen Worten unterstützt der Matrizenstempel das Werkstück beim Einstanzen nicht nur in einer Ebene, die durch eine Werkstückabstützfläche definiert ist, auf der das Werkstück während des Verfahrens aufliegt. Die Erhebung des Matrizenstempels sorgt dafür, dass ein Mittelteil des auszustanzenden Butzens sogar zu dem einzustanzenden Befestigungselement hingedrückt wird. Dies erleichtert das Schneiden während des Eindringens des Stanzabschnitts in das Werkstück. Insbesondere umfasst der Matrizenstempel eine Schneidkante, die zu Beginn des Einstanzprozesses in einer Ebene liegt, die durch den Rand der Ausnehmung der Matrize definiert ist.

Gemäß einer Ausführungsform wird eine Bewegung des Matrizenstempels entgegen und/oder in Richtung der Anpresskraft durch eine Anschlagvorrichtung begrenzt, um einerseits eine wohldefinierte Lage des Matrizenstempels vor dem Einstanzen des Befestigungselements festzulegen und um andererseits durch die Festlegung einer maximalen Auslenkung des Matrizenstempels eine kontrollierte Befestigung des Befestigungselements an dem Werkstück sicherzustellen.

Der Matrizenstempel kann eine Umformfläche aufweisen, durch die der Stanzabschnitt zumindest abschnittsweise nach radial außen verformt wird. Beispielsweise wird durch die Umformfläche der auch als Nietabschnitt dienende Stanzabschnitt umgebördelt. Die Umformfläche kann zumindest abschnittsweise konisch und/oder konkav geformt sein.

Es kann vorgesehen sein, dass beim Einstanzen und Befestigen des Befestigungselements eine Sicke erzeugt wird, die einen in einem Endzustand an dem Werkstück anliegenden Flansch des Befestigungselements zumindest teilweise aufnimmt. Insbesondere ist die Sicke zumindest so tief, dass der Flansch in axialer Richtung nicht aus der Sicke ragt.

Die vorbestimmte Anpresskraft kann in Abhängigkeit von Eigenschaften des Werkstücks, in Abhängigkeit von Eigenschaften des Befestigungselements und/oder in Abhängigkeit von einer Einpresskraft gewählt werden, mit der das Befestigungselement von einer Presseinheit gegen das Werkstück gepresst wird, um zu gewährleisten, dass zumindest während des Schneidprozesses beim Einstanzen des Befestigungselement eine zuverlässige Abstützung des Werkstücks im Bereich des herauszutrennenden Butzens vorliegt. So kann eine frühzeitige Entstehung einer das Material des Werkstücks dehnenden und so zur Entstehung von Spänen führenden Sicke vermieden wird.

Dem Matrizenstempel kann eine einstellbare Vorspannrichtung zugeordnet sein, mit der die vorbestimmte Anpresskraft einstellbar ist.

Beschrieben ist ferner eine Matrize zum Einstanzen und Befestigen eines Befestigungselements an einem ebenen Werkstück, insbesondere an einem Blechteil, gemäß einem Verfahren nach zumindest einer der vorstehend beschriebenen Ausführungsformen, wobei der beweglich angeordnete Matrizenstempel durch eine Vorspanneinrichtung gegen das Werkstück pressbar ist und wobei eine von der Vorspanneinrichtung bereitgestellte Anpresskraft derart gewählt ist, dass sich der Matrizenstempel erst bewegt, wenn durch einen Stanzabschnitt des Befestigungselements ein Butzen aus dem Werkstück herausgetrennt wurde. Die Bewegung des Matrizenstempels erfolgt dabei in Bewegungsrichtung des Befestigungselements.

Gemäß einer Ausführungsform ist die von der Vorspanneinrichtung erzeugte, vorbestimmte Anpresskraft einstellbar.

Insbesondere umfasst die Vorspanneinrichtung eine Feder. Die Vorspanneinrichtung kann sowohl als eine mechanische Feder, wie eine Schraubenfeder als auch als eine pneumatische Feder, z.B. mit einer pneumatisch betätigten Kolben-in-Zylinder Anordnung oder als eine hydraulische Feder, z.B. mit einer hydraulisch betätigten Kolben-in-Zylinder Anordnung oder als (bewegliche) Rastelement ausgeführt werden. Darüber hinaus kann der Matrizenstempel durch einen als Aktuator zwischen den zwei vorgegebenen Stellungen bewegt werden, der ein Äquivalent einer Vorspanneinrichtung darstellt und welcher z.B. auf elektrischer, pneumatischer oder hydraulischer Art ausgeführt werden kann.

Nachfolgend wird die vorliegende Erfindung rein beispielhaft anhand einer vorteilhaften Ausführungsform der Erfindung unter Bezugnahme auf die beigefügten Zeichnungen erläutert. Es zeigen:
- Fig. 1 bis 10: ein herkömmliches Verfahren zum Einstanzen und Befestigen eines Befestigungselements an einem ebenen Werkstück und
- Fig. 11 bis 22: eine Ausführungsform des erfindungsgemäßen Verfahrens.

Genauer gesagt zeigen:

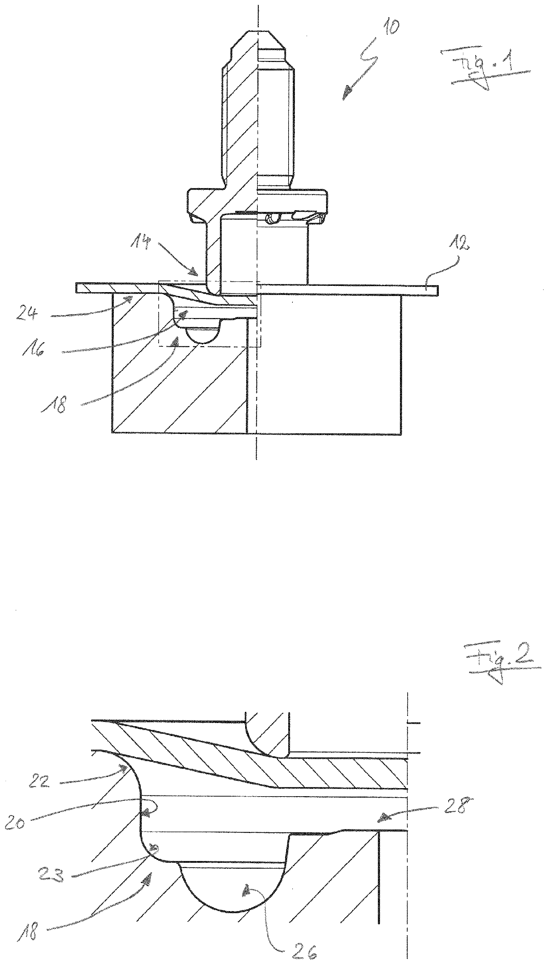

- Fig. 1: ein Bolzenelement, das in ein ebenes Blechteil 12 eingestanzt wird,
- Fig. 2: den in Fig. 1 gestrichelt gekennzeichneten Ausschnitt in einer vergrößerten Darstellung,

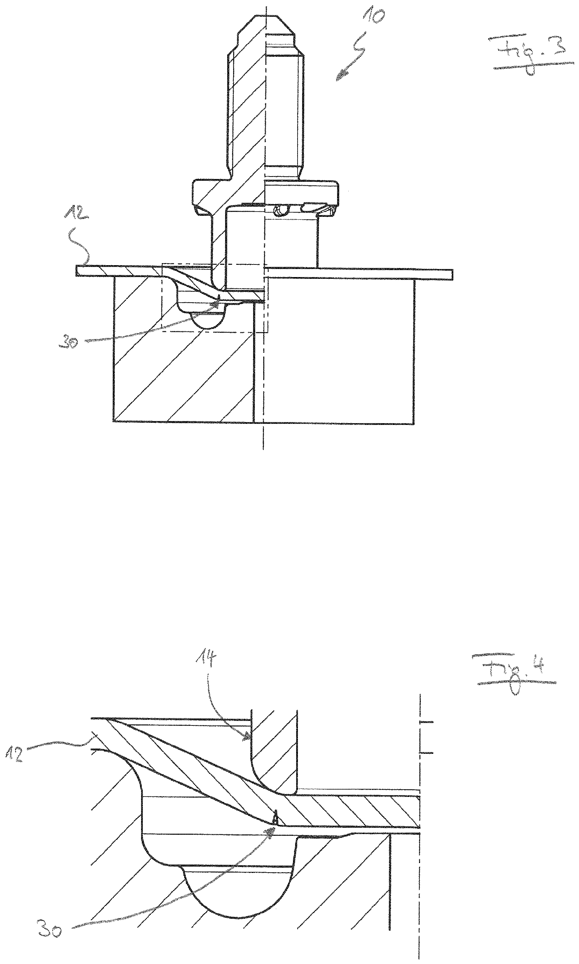

- Fig. 3: eine Darstellung ähnlich der Fig.1, jedoch in einem weiter fortgeschrittenen Zustand der Anbringung des Bolzenelements,
- Fig. 4: eine vergrößerte Darstellung des mittleren Bereiches der Fig. 3,

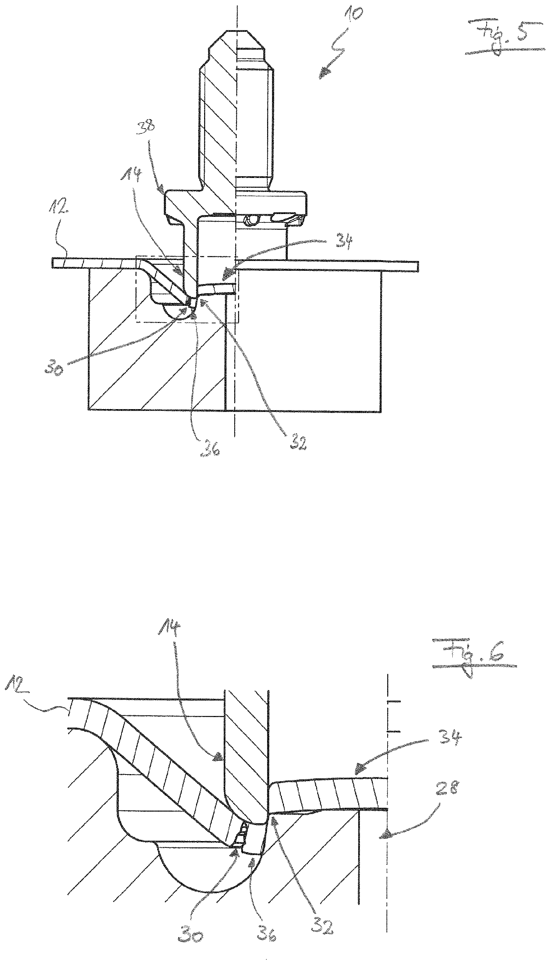

- Fig. 5: das Reißen des Blechteils in einem noch weiter fortgeschrittenen Zustand der Anbringung des Bolzenelements,
- Fig. 6: eine vergrößerte Darstellung des mittleren Bereiches der Fig. 5,

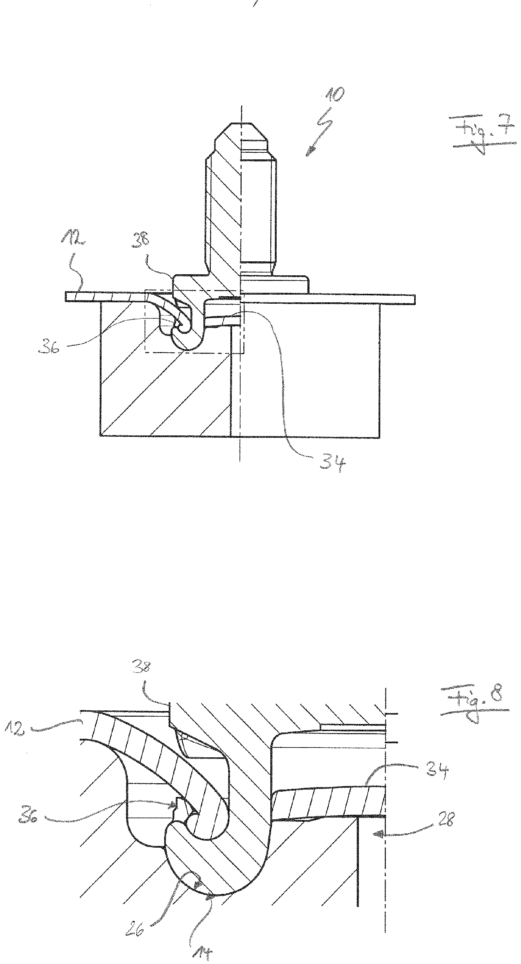

- Fig. 7: die Entstehung eines Spans in einem fortgeschrittenen Zustand der Anbringung des Bolzenelements,
- Fig. 8: eine vergrößerte Darstellung des mittleren Bereiches der Fig. 7,

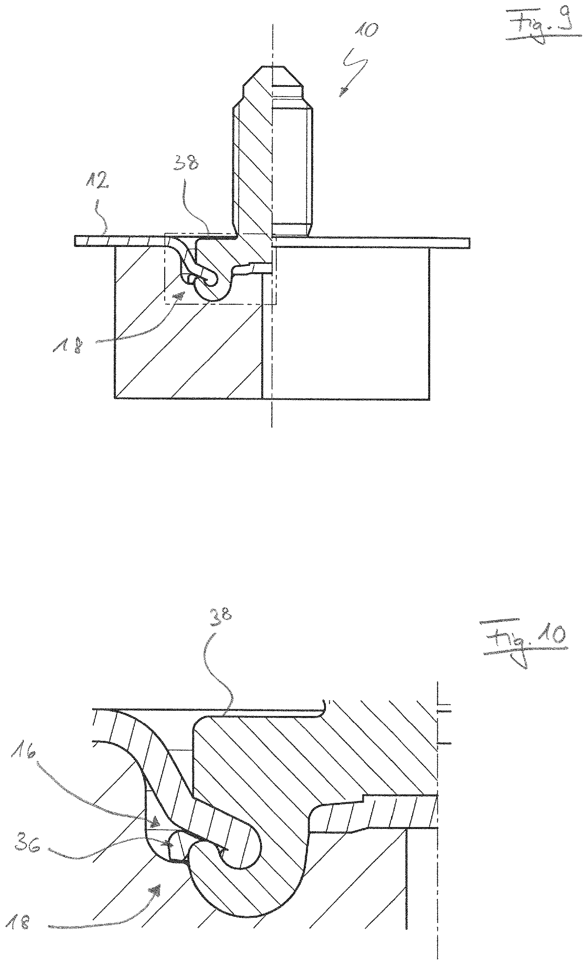

- Fig. 9: die Fertigstellung der Verbindung des Bolzenelements mit dem Blechteil,
- Fig. 10: eine vergrößerte Darstellung des mittleren Bereiches der Fig. 9,

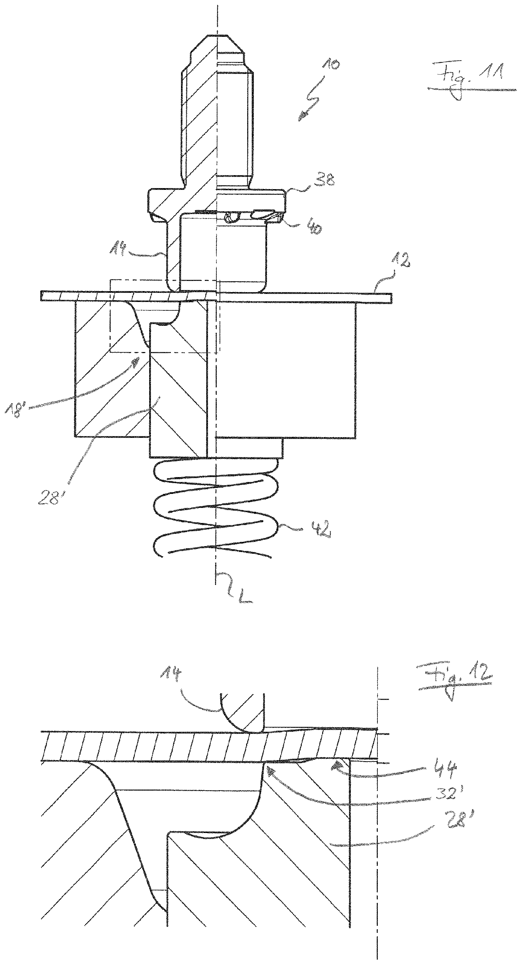

- Fig. 11: eine Darstellung des Anfangs der Anbringung des Bolzenelements an ein Blechteil bei dem erfindungsgemäßen Verfahren mit der Anwendung einer geeigneten Matrize,
- Fig. 12: eine vergrößerte Darstellung des mittleren Bereiches der Fig. 11,

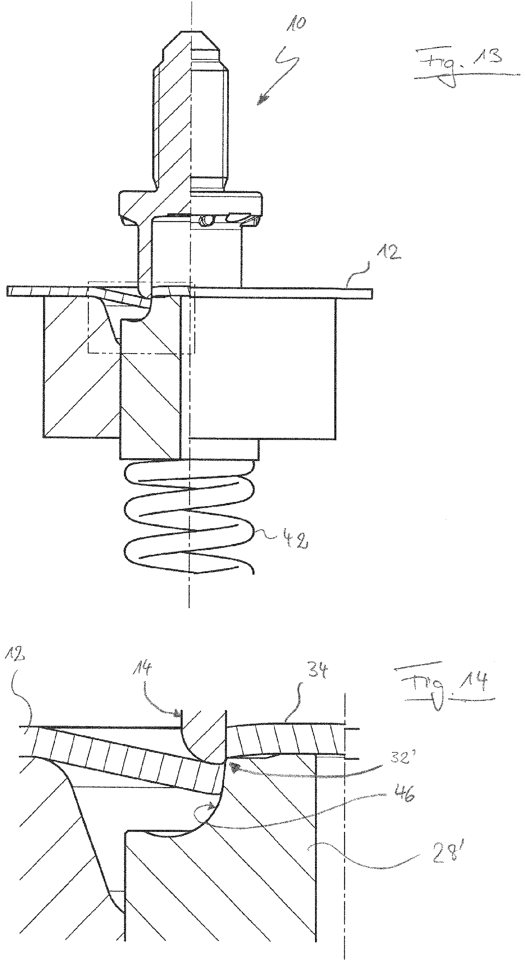

- Fig. 13: eine Darstellung des erfindungsgemäßen Verfahrens unmittelbar nach der Ausbildung des Stanzbutzens,
- Fig. 14: eine vergrößerte Darstellung des mittleren Bereiches der Fig. 13,

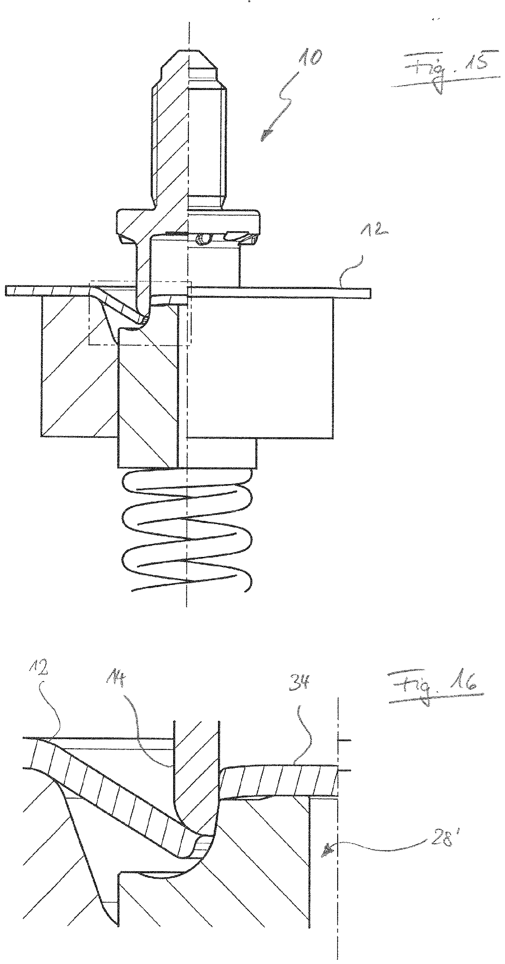

- Fig. 15: eine Darstellung ähnlich der Fig. 13, jedoch nach der anfänglichen Bewegung des Matrizenstempels,
- Fig. 16: eine vergrößerte Darstellung des mittleren Bereiches der Fig. 15,

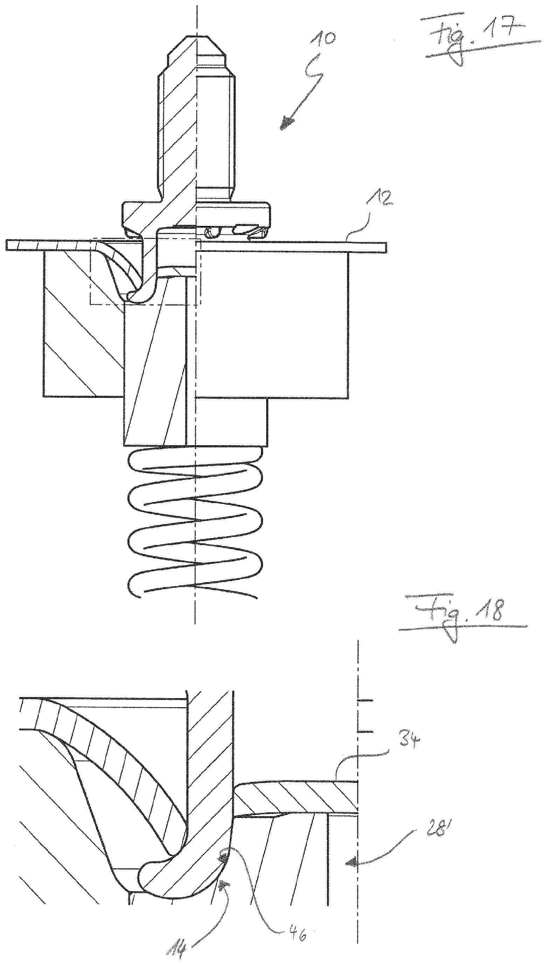

- Fig. 17: eine Darstellung ähnlich der Fig. 15, jedoch nach einer weiteren Bewegung des Matrizenstempels,
- Fig. 18: eine vergrößerte Darstellung des mittleren Bereiches der Fig. 17,

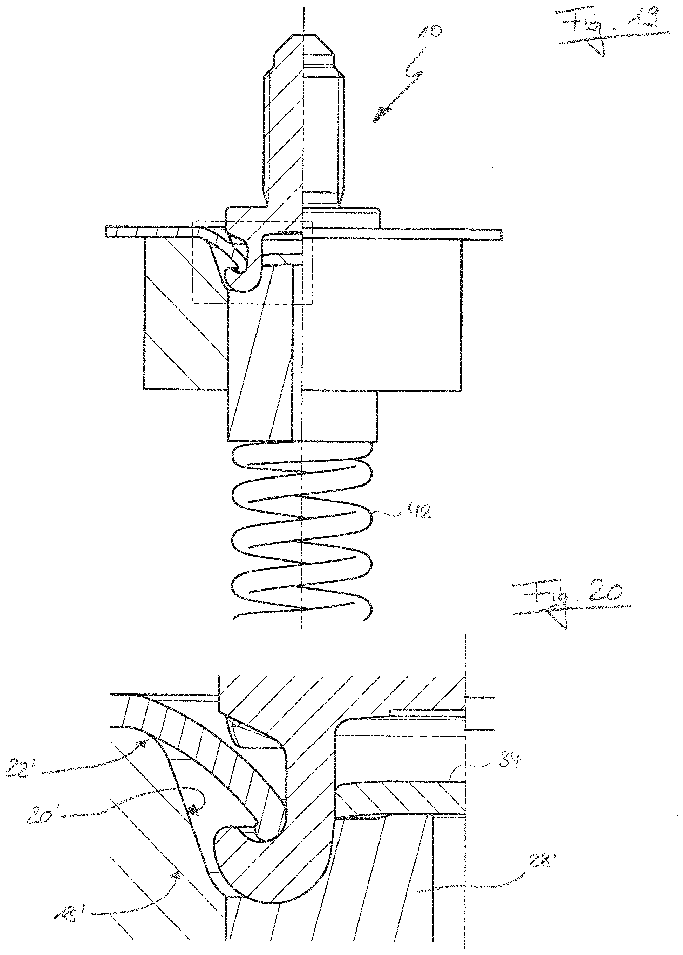

- Fig. 19: eine Darstellung ähnlich der Fig. 17, jedoch kurz vor dem Abschluss der Ausbildung des Nietbördels,
- Fig. 20: eine vergrößerte Darstellung des mittleren Bereiches der Fig. 19,

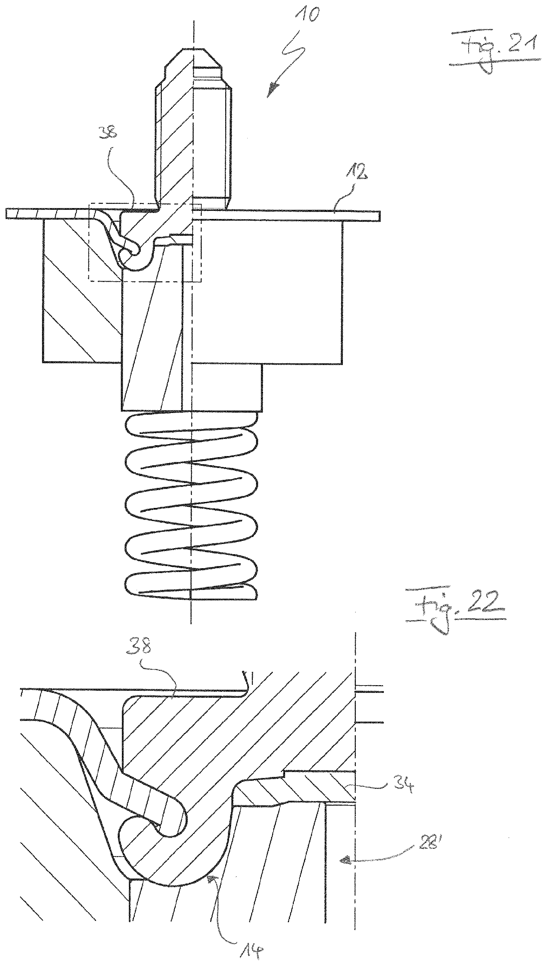

- Fig. 21: eine Darstellung ähnlich der Fig. 19, jedoch nach Abschluss der Ausbildung des Nietbördels und der Anbringung des Bolzenelements an das Blechteil,
- Fig. 22: eine vergrößerte Darstellung des mittleren Bereiches der Fig. 21.

Fig. 1 zeigt ein Bolzenelement 10, das in ein ebenes Blechteil 12 eingestanzt und an diesem befestigt werden soll. Es versteht sich, dass anstelle des Bolzenelements 10 ein Mutterelement, ein Hohlniet oder ein anderes selbststanzendes Element verwendet werden kann.

Ein Stanzabschnitt 14 des Bolzenelements 10 beginnt in dem in Fig. 1 gezeigten Zustand bereits, das Blechteil 12 in eine Ausnehmung 16 einer Matrize 18 zu drücken, wodurch die Formung einer Sicke einsetzt.

Fig. 2 zeigt den in Fig. 1 gestrichelt gekennzeichneten Ausschnitt in einer vergrößerten Darstellung. Die Matrize 18 umfasst einen Matrizenmantel 20, der über einen einen Rand der Ausnehmung 16 bildenden gerundeten Abschnitt 22 mit einer Blechauflagefläche 24 (siehe auch Fig. 1) in Verbindung steht. Auf der Blechauflagefläche 24 liegt das Blechteil 12 während dem Einstanz- und Befestigungsprozess auf.

An der der Blechauflagefläche 24 abgewandten Ende der Ausnehmung 16 geht der Matrizenmantel 20 in einen weiteren gerundeten Abschnitt 23 über, an den sich radial innenseitig wiederum ein von einer Ringnut 26 umgebener Matrizenstempel 28 anschließt.

In den Fig. 3 und 4 ist zu erkennen, dass sich bei einer zunehmenden Vertiefung der Sicke ein Riss 30 in dem Blechteil 12 bildet, da das Material hier durch den Stanzabschnitt 14 besonders stark gedehnt wird.

Der Riss 30 pflanzt sich - wie in den Fig. 5 und 6 gezeigt - fort, bis er das Blechteil 12 vollkommen durchdrungen hat. Es ist zu erkennen, dass der Riss 30 üblicherweise nicht dort entsteht, wo der Stanzabschnitt 14 in Zusammenwirken mit einer Schneidkante 32 des Matrizenstempels 28 zu einem Durchtrennen des Blechteils 12 und damit zur Erzeugung eines Butzens 34 führt. Daher entsteht ein ringförmiger Span 36, der bei einem Umbördeln des auch als Nietabschnitt fungierenden Stanzabschnitts 14 durch die Wirkung der Ringnut 26 zwischen dem Stanzabschnitt 14 und einer einem Flansch 38 des Bolzenelements 10 abgewandten Seite des Blechteils 12 eingeklemmt wird (siehe Fig. 7 und 8).

In vielen Fällen verbleibt der Span 36 zwischen dem Blechteil 12 und dem umgebogenen Stanzabschnitt 14. Oftmals wird er jedoch bei einem weiteren Einpressen des Bolzenelements 10 gegen die Matrize 18 nach außen gedrängt, was in den Fig. 9 und 10 gezeigt ist. Der Span 36 verbleibt dann entweder in der Ausnehmung 16 der Matrize 18, wo er nachfolgende Einstanzprozesse stört, oder er wird beim Entfernen des Zusammenbauteils bestehend aus Blechteil 12 und Bolzenelement 10 ebenfalls aus der Matrize 18 entfernt und vagabundiert dann als störender Fremdkörper durch das Werkzeug.

Das nachfolgend anhand der Fig. 11 bis 22 beschriebene Verfahren verhindert zuverlässig die Entstehung von Spänen 36.

Wie auch bei herkömmlichen Verfahren kann ein Bolzenelement 10 zum Einsatz gelangen, das mit Verdrehsicherungsmerkmalen 40 an dem mit dem Blechteil 12 zur Anlage zu bringenden Flansch 38 versehen ist. Grundsätzlich lässt sich das erfindungsgemäße Verfahren aber mit beliebigen selbststanzenden Elementen durchführen.

Wie in Fig. 11 zu erkennen ist, weist eine erfindungsgemäße Matrize 18' einen beweglichen Matrizenstempel 28' auf, der zu Beginn des Einstanz- und Befestigungsprozesses von der dem Bolzenelement 10 abgewandten Seite gegen das Blechteil 12 gepresst wird. Die Anpresskraft, die koaxial zu einer Längsachse L des Bolzenelements 10 und des Stempels 28' wirkt, wird durch eine Feder 42 bereitgestellt. Es versteht sich, dass anstelle der Feder 42 andere Einrichtungen zum Einsatz gelangen können, die eine vordefinierte Anpresskraft erzeugen können, wie beispielsweise hydraulische und/oder pneumatische Systeme.

Durch den Matrizenstempel 28' wird das Blechteil 12 in einem zentralen Bereich des auszustanzenden Butzens 34 abgestützt. In Fig. 12 ist zu erkennen, dass eine Erhebung 44 des Matrizenstempels 28' in dem gezeigten Grundzustand etwas aus der durch die Blechauflagefläche 24 bzw. den Rand der Ausnehmung 16 der Matrize 18 definierten Ebene hinausragt. Das Blechteil 12 wird dadurch in diesem Bereich ein wenig zu dem Bolzenelement 10 hin gebogen, um das Herausstanzen des Butzens 34 durch den Stanzabschnitt 14 und die Schneidkante 32' zu unterstützen. Die Schneidkante 32' liegt in dem gezeigten Zustand in der vorstehend genannten Ebene.

Wie in den Fig. 13 und 14 zu erkennen ist, ist die durch die Feder 42 bereitgestellte Anpresskraft dabei so gewählt, dass während des Heraustrennens des Butzens 34 aus dem Blechteil 12 noch keine Bewegung des Matrizenstempels 28' nach unten auftritt. Erst sobald aufgrund der Formgebung einer Umformfläche 46 des Matrizenstempels 28' eine Umformung des Stanzabschnitts 14 einsetzt und dadurch entsprechend große Kräfte zwischen dem Stanzabschnitt 14 und dem Matrizenstempel 28' wirken, weicht letzterer nach unten aus, was in den Fig. 15 und 16 gezeigt ist.

Mit anderen Worten wird die Anpresskraft unter Berücksichtigung u.a. der Eigenschaften des Blechteils 12 und/oder der auf das Element 10 ausgeübten Einpresskraft so gewählt, dass der in Entstehung begriffene Butzen 34 während des gesamten Stanzprozesses abgestützt wird. Erst nachdem der Butzen 34 vollständig aus dem Blechteil 12 herausgetrennt wurde, ist eine Bewegung des Matrizenstempels 28' vorgesehen. Wann diese konkret einsetzt, hängt unter anderem von der Formgebung der Umfangfläche 46 und der eingestellten Anpresskraft ab. Es ist vorgesehen, dass die Umformung des Stanzabschnitts 14 erst vergleichsweise spät einsetzt und der Matrizenstempel 28' nicht unmittelbar nach dem Ausstanzen des Butzens 34 in Bewegung versetzt wird.

Der Beginn des Umformprozesses des Stanzabschnitts 14 ist in den Fig. 15 und 16 gezeigt. Aufgrund der dadurch verstärkten Kopplung des Abschnitts 14 und des Stempels 28' wird ein größerer Anteil der auf das Bolzenelement 10 einwirkenden Einpresskraft auf den Stempel 28' übertragen, so dass die Anpresskraft überwunden wird und der Stempel 28' beginnt, nach unten auszuweichen.

In den Fig. 17 und 18 ist ein Zustand gezeigt, in dem der Matrizenstempel 28' eine untere Endposition erreicht hat. D.h. er hat eine Anschlagposition erreicht, so dass sich der Stempel 28' nicht mehr bewegt. Der Stanzabschnitt 14 wird durch die im unteren Teil konkave Ausgestaltung der Umformfläche 46 nach außen umgebördelt. Der konkave Abschnitt der Umformfläche 46 bildet daher eine mit der Ringnut 26 vergleichbare Komponente, die zum Umbördeln des Stanzabschnitts 14 dient, was auch in den Fig. 19 bis 22 zu sehen ist. Es versteht sich, dass eine Ausgestaltung eines Matrizenmantels 20' der Matrize 18' an die jeweils vorliegenden Anforderungen angepasst werden kann. Gleiches gilt für den gerundeten Randabschnitt 22', die funktionell dem gerundeten Abschnitt 22 der Matrize 18 entspricht.

In den Fig. 21 und 22 ist zu erkennen, dass der dargestellte Endzustand dem in den Fig. 9 und 10 gezeigten Zustand dahingehend ähnelt, dass der Flansch 38 in axialer Richtung vollkommen von einer durch den Einstanz- und Befestigungsprozess gebildeten Sicke aufgenommen wird. Das erfindungsgemäße Verfahren sorgt somit für eine riss- und daher spanvermeidende Abstützung des auszustanzenden Butzens 34 zu Beginn des Verfahrens und gestattet gleichzeitig die Bildung einer Sicke, die den Flansch 38 aufnimmt. Erfindungsgemäß wurde erkannt, dass die Anpresskraft des abstützenden Matrizenstempels 28' dabei so gewählt werden muss, dass erst nach dem Ausstanzen des Butzens 34 eine Bewegung des Matrizenstempels 28' zugelassen wird.

### Bezugszeichenliste

- 10: Bolzenelement
- 12: Blechteil
- 14: Stanzabschnitt
- 16: Ausnehmung
- 18, 18': Matrize
- 20, 20': Matrizenmantel
- 22, 23, 22': gerundeter Abschnitt
- 24: Blechauflagefläche
- 26: Ringnut
- 28, 28': Matrizenstempel
- 30: Riss
- 32: Schneidkante
- 34: Butzen
- 36: Span
- 38: Flansch
- 40: Verdrehsicherungsmerkmal
- 42: Feder
- 44: Erhebung
- 46: Umformfläche
- L: Längsachse

## Patentansprüche

1. Verfahren zum Einstanzen und Befestigen eines Befestigungselements (10) an einem ebenen Werkstück (12), insbesondere an einem Blechteil, wobei während dem Einstanzen des Befestigungselements (10) in das Werkstück (12) ein beweglich angeordneter Matrizenstempel (28') einer Matrize (18') mit einer vorbestimmten Anpresskraft gegen das Werkstück (12) gepresst wird,
**gekennzeichnet dadurch, dass**
die Anpresskraft derart angepasst ist, dass sich der Matrizenstempel (28') erst bewegt, wenn durch einen Stanzabschnitt (14) des Befestigungselements (10) ein Butzen (34) aus dem Werkstück (12) herausgetrennt wurde und ein Befestigungsabschnitt (14) des Befestigungselements durch eine Umformfläche des Matrizenstempels (28') verformt wird.

2. Verfahren nach Anspruch 1,
**dadurch gekennzeichnet,**
**dass** der Matrizenstempel (28') in einer Richtung parallel zu einer Einstanzbewegung des Befestigungselements (10) beweglich ist.

3. Verfahren nach Anspruch 1 oder 2,
**dadurch gekennzeichnet,**
**dass** die Anpresskraft, d.h. die Kraft die den Matrizenstempel in Richtung auf das Werkstuck zu vorspannt, antiparallel zu einer Einstanzbewegung des Befestigungselements (10) gerichtet ist.

4. Verfahren nach zumindest einem der vorhergehenden Ansprüche,
**dadurch gekennzeichnet,**
**dass** der Matrizenstempel (28') eine Schneidkante (32') umfasst, die zu Beginn des Einstanzprozesses in einer Ebene liegt, die durch einen Rand einer Ausnehmung (16') der Matrize (18') definiert ist.

5. Verfahren nach zumindest einem der vorhergehenden Ansprüche,
**dadurch gekennzeichnet,**
**dass** der Matrizenstempel (28') eine Erhebung (44) umfasst, die zu Beginn des Einstanzprozesses aus einer Ebene herausragt, die durch einen Rand einer Ausnehmung (16') der Matrize (18') definiert ist.

6. Verfahren nach zumindest einem der vorhergehenden Ansprüche,
**dadurch gekennzeichnet,**
**dass** eine Bewegung des Matrizenstempels (28') entgegen und/oder in Richtung der Anpresskraft durch eine Anschlagvorrichtung begrenzt wird.

7. Verfahren nach zumindest einem der vorhergehenden Ansprüche,
**dadurch gekennzeichnet ,**
**dass** der Matrizenstempel (28') eine Umformfläche (46) aufweist, durch die der Stanzabschnitt (14) zumindest abschnittsweise nach radial außen verformt wird, insbesondere wobei die Umformfläche (46) zumindest abschnittsweise konisch und/oder konkav geformt ist.

8. Verfahren nach zumindest einem der vorhergehenden Ansprüche,
**dadurch gekennzeichnet,**
**dass** eine Sicke erzeugt wird, die einen in einem Endzustand an dem Werkstück (12) anliegenden Flansch (38) des Befestigungselements (10) zumindest teilweise aufnimmt.

9. Verfahren nach zumindest einem der vorhergehenden Ansprüche,
**dadurch gekennzeichnet,**
**dass** die vorbestimmte Anpresskraft in Abhängigkeit von Eigenschaften des Werkstücks (12), in Abhängigkeit von Eigenschaften des Befestigungselements (10) und/oder in Abhängigkeit von einer von einer Presseinheit erzeugten und auf das Befestigungselements (10) ausgeübten Einpresskraft gewählt wird.

10. Verfahren nach zumindest einem der vorhergehenden Ansprüche,
**dadurch gekennzeichnet,**
**dass** dem Matrizenstempel (28') eine einstellbare Vorspanneinrichtung (42) zugeordnet ist, mit der die vorbestimmte Anpresskraft eingestellt werden kann.

## Claims

1. A method for punching in and attaching a fastener element (10) to a planar workpiece (12), in particular to a sheet metal part, wherein a movably arranged die plunger (28') of a die button (18') is pressed with a predetermined pressing force against the workpiece (12) during the punching of the fastener element (10) into the workpiece (12),
**characterized in that**
the pressing force is adapted such that the die plunger (28') first moves when a slug (34) has been cut out of the workpiece (12) by a piercing section (14) of the fastener element (10) and a fastener section (14) of the fastener element is deformed by a shaping surface of the die plunger (28').

2. A method in accordance with claim 1,
**characterized in that**
the die plunger (28') is movable in a direction parallel to a piercing movement of the fastener element (10).

3. A method in accordance with claim 1 or claim 2,
**characterized in that**
the pressing force, i.e. the force which biases the die plunger in the direction towards the workpiece, is directed antiparallel to a piercing movement of the fastener element (10).

4. A method in accordance with at least one of the preceding claims,
**characterized in that**
the die plunger (28') comprises a cutting edge (32') which, at the start of the piercing process, lies in a plane which is defined by a rim of a recess (16') of the die button (18').

5. A method in accordance with at least one of the preceding claims,
**characterized in that**
the die plunger (28') comprises a raised portion (44) which, at the start of the piercing process, projects out of a plane which is defined by a rim of a recess (16') of the die button (18').

6. A method in accordance with at least one of the preceding claims,
**characterized in that**
a movement of the die plunger (28') opposite to and/or in the direction of the pressing force is restricted by an abutment apparatus.

7. A method in accordance with at least one of the preceding claims,
**characterized in that**
the die plunger (28') has a shaping surface (46) by which the piercing section (14) is at least regionally deformed radially outwardly, with the shaping surface (46) in particular being conically and/or concavely shaped at least regionally.

8. A method in accordance with at least one of the preceding claims,
**characterized in that**
a depression is generated which at least partly receives a flange (38) of the fastener element (10) contacting the workpiece (12) in an end state.

9. A method in accordance with at least one of the preceding claims,
**characterized in that**
the predetermined pressing force is selected in dependence on the properties of the workpiece (12), in dependence on the properties of the fastener element (10) and/or in dependence on a pressing force generated by a pressing unit and exerted on the fastener element (10).

10. A method in accordance with at least one of the preceding claims,
**characterized in that**
an adjustable biasing device (42), with which the predetermined pressing force can be set, is associated with the die plunger (28').

## Revendications

1. Procédé pour enfoncer par poinçonnage et fixer un élément de fixation (10) sur une pièce à œuvrer plane (12), en particulier sur une pièce en tôle, dans lequel, pendant l'enfoncement de l'élément de fixation (10) par poinçonnage dans la pièce à œuvrer (12), un poinçon (28') d'une matrice (18'), disposé de manière mobile, est pressé contre la pièce à œuvrer (12) avec une force de pressage prédéterminée,
**caractérisé en ce que**
la force de pressage est adaptée de manière à ce que le poinçon (28') se déplace uniquement après qu'une pastille (34) a été découpée hors la pièce à œuvrer par une portion de poinçonnage (14) de l'élément de fixation (10) et qu'une portion de fixation (14) de l'élément de fixation est déformée par une surface de formage du poinçon (28').

2. Procédé selon la revendication 1,
**caractérisé en ce que**
le poinçon (28') est mobile dans une direction parallèle à un mouvement d'enfoncement par poinçonnage de l'élément de fixation (10).

3. Procédé selon la revendication 1 ou 2,
**caractérisé en ce que**
la force de pressage, c'est-à-dire la force qui précontraint le poinçon en direction de la pièce à œuvrer, est antiparallèle à un mouvement d'enfoncement par poinçonnage de l'élément de fixation (10).

4. Procédé selon l'une au moins des revendications précédentes,
**caractérisé en ce que**
le poinçon (28') comporte une arête de coupe (32') qui, au début du processus d'enfoncement par poinçonnage, se trouve dans un plan défini par un bord d'un évidement (16') de la matrice (18').

5. Procédé selon l'une au moins des revendications précédentes,
**caractérisé en ce que**
le poinçon (28') comprend un bossage (44) qui, au début du processus d'enfoncement par poinçonnage, dépasse d'un plan défini par un bord d'un évidement (16') de la matrice (18').

6. Procédé selon l'une au moins des revendications précédentes,
**caractérisé en ce que**
le mouvement du poinçon (28') en sens opposé à et/ou dans la direction de la force de pressage est limité par un dispositif de butée.

7. Procédé selon l'une au moins des revendications précédentes,
**caractérisé en ce que**
le poinçon (28') présente une surface de formage (46) par laquelle la portion de poinçonnage (14) est déformée au moins localement radialement vers l'extérieur, en particulier la surface de formage (46) étant au moins localement mise en forme conique et/ou concave.

8. Procédé selon l'une au moins des revendications précédentes,
**caractérisé en ce que**
une moulure est réalisée qui reçoit au moins partiellement une bride (38) de l'élément de fixation (10) qui, dans un état final, prend appui contre la pièce à œuvrer (12).

9. Procédé selon l'une au moins des revendications précédentes,
**caractérisé en ce que**
la force de pressage prédéterminée est choisie en fonction des propriétés de la pièce à œuvrer (12), en fonction des propriétés de l'élément de fixation (10) et/ou en fonction d'une force d'enfoncement générée par un ensemble de pressage et exercée sur l'élément de fixation (10).

10. Procédé selon l'une au moins des revendications précédentes,
**caractérisé en ce que**
un moyen de précontrainte (42) réglable est associé au poinçon (28'), permettant de régler la force de pressage prédéterminée.
